# EUROPEAN PATENT SPECIFICATION

(11) **EP 0 260 774 B1**
(45) Date of publication and mention of the grant of the patent: **18.08.1993**
(21) Application number: 87201898.1
(22) Date of filing: 29.05.1985
(51) Int. Cl.: G02B 6/38, G02B 6/44, H01R 13/56, H01R 3/00

(54) **Fiber optic connector strain relief**
Zugentlastung für faseroptischen Stecker
Décharge de contrainte pour connecteur à fibre optique

(30) Priority: 08.06.1984 US 618851; 17.05.1985 US 734831
(43) Date of publication of application: 23.03.1988
(62) Divisional of application: 85903102.3
(73) Proprietor: THE WHITAKER CORPORATION, Wilmington, Delaware 19808 (US)
(72) Inventor: Stape, William Joseph, Harrisburg Pennsylvania 17105 (US); Weber, Robert Ney, Hummelstown Pennsylvania 17036 (US)
(74) Representative: Warren, Keith Stanley

(56) References cited:
- GB-A- 2 069 175
- US-A- 3 032 737
- US-A- 4 167 303
- US-A- 4 203 004

## Description

This invention concerns a strain relief for fiber optic cable connectors and particularly but not exclusively for use with connectors of the kind disclosed in our EP-A-0 183 820 from which this application is divided.

It is known from GB-A-2 069 175 to provide a strain relief for a fiber optic cable connector comprising a tubular length of flexible material with a generally cylindrical axial bore sized for receiving a fiber optic cable therewithin, profiled at a first end to be anchored thereat to the connector while clamping on to said cable.

It is an object to provide an improved strain relief.

The present invention consists in a strain relief for protecting a fiber optic cable where it enters a connector, comprising: a generally tubular length of flexible material, provided with a cylindrical axial bore sized for receiving said fiber optic cable therewithin, profiled at a first end to be anchored to said connector while clamping onto said fiber optic cable said tubular length being formed to have narrow openings oriented normally with respect to the axis of said bore, characterized in that a predetermined number of said openings each have one side with a small bump of predetermined shape and size which projects transversely across the opening but does not quite extend to the opposite side of the opening.

It is known from US-A-3 032 737, which discloses a strain relief as defined in the preamble of claim 1, to provide a cable strain relief for an electrical connector which comprises a tubular length of flexible material provided with an axial bore for receiving a cable therethrough and having a plurality of slit-like openings substantially normal to the axis and arranged in an ascending spiral line. The slits are separated by narrow crosspieces distributed about the axis along the spiral in circumferential rows which are staggered with respect to adjacent rows.

Embodiments of the invention will now be described by way of example with reference to the accompanying partly diagrammatic drawings, in which:-
Figure 1 is a perspective view of a heavy duty strain relief according to the invention from a rear thereof; and
Figures 2 and 3 are a side elevation and longitudinal cross-section of a modified embodiment.

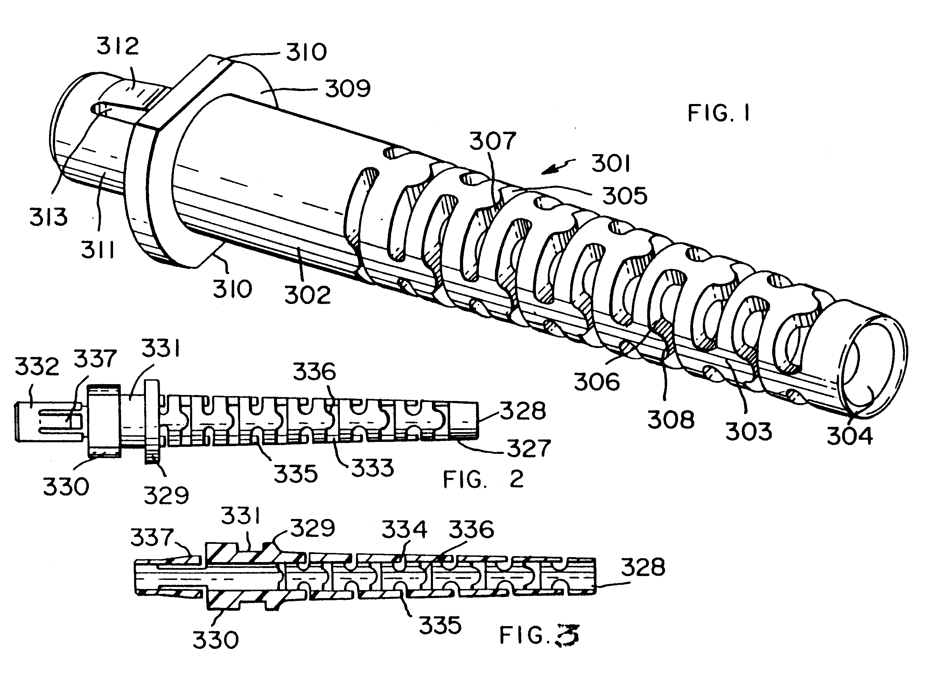

Figures 1-3 illustrate strain reliefs which provide heavy duty protection against bending of a fiber optic cable to unacceptably small radii due to externally encountered physical loads. Such a heavy duty strain relief 301 has a short generally right-cylindrical end portion 311, a short flange 309 provided with oppositely located flats 310 and 310, followed by a generally cylindrical portion 302 which ultimately tapers towards the other end. A cylindrical bore 304 axially aligned through 301 is sized to comfortably accommodate the exterior diameter of a fiber optic cable. Overlapping, alternately positioned, staggered series of openings 305 and 306 are provided in the tapered portion of strain relief 301 to allow greater flexibility in that portion thereof. However, to ensure that the tapered portion and individual optical fibers contained therewithin will not be bent to too small a radius, each cut is provided with a generally semi-circular mid-position internal side extension of predetermined size on one long side of each of the openings, Figure 1. Thus extension 307 provided in opening 305 does not extend all the way across the width of the cut. Likewise for semi-circular extension 308 in typical opening 306. The presence of these semi-circular extensions 307 and 308 in strain relief 301 allows flexible connection between the cable end and the strain relief while limiting in a predetermined manner, by choice of shape and size of extensions 307 and 308, the minimum radius that the cable can attain due to lateral external forces acting on the cable to bend the tapered portion of strain relief 301. The particular heavy duty strain relief shown in Figure 1 has in the right cylindrical end portion 311 a cantilevered extension 312, within an opening 313 surrounding it on three sides, to permit latching attachment within a suitably sized cylindrical aperture. Such an aperture may be the inside of a cable clamp.

Yet another embodiment employing the extensions within the series of openings, as described in the preceding paragraph, is depicted in Figures 2 and 3. Thus, in Figure 2, heavy duty strain relief 326, while generally similar to heavy duty strain relief 301, has flanges 329 and 330 separated by a short right cylindrical portion 331. Details of the cantilevered extensions 337 are clearly seen in Figures 2 and 3. Here again, cylindrical bore 328 through strain relief 326 comfortably accommodates a fiber optic cable passing therethrough. Extensions 335 and 336, in cuts 333 and 334 respectively, serve to provide a predetermined limitation to the smallest radius that can be taken up by a cable passing through the strain relief when subjected to lateral externally applied forces.

## Claims

1. A strain relief (301,331) for protecting a fiber optic cable where it enters a connector, comprising:
a generally tubular length (302) of flexible material, provided with a cylindrical axial bore (304,328) sized for receiving said fiber optic cable therewithin, profiled at a first end (311,332) to be anchored to said connector while clamping onto said fiber optic cable, said tubular length (302) being formed to have narrow openings (305,306,333,334) oriented normally with respect to the axis of said bore, characterized in that a predetermined number of said openings (305,306,333,334) each have one side with a small bump (307,308,335,336) of predetermined shape and size which projects transversely across the opening but does not quite extend to the opposite side of the opening.

2. A strain relief (301,331) according to claim 1, characterized by including:
flexible latch (312,337) means at said first end (311,332) for engaging the connector, said strain relief (301,331) clamping a portion of said fiber optic cable therewithin, whereby said fiber optic cable is prevented from sliding in or out or twisting with respect to said strain relief (301,331).

3. A strain relief as claimed in claim 1 or claim 2, characterized in that the narrow openings are distributed in staggered series.

## Patentansprüche

1. Spannungsentlastungselement (301, 331) zum Schutz eines faseroptischen Kabels, wo dieses in einen Verbinder eintritt, mit
einem allgemein rohrförmigen Längenstück (302) aus flexiblem Material, das mit einer zylindrischen Axialbohrung (304, 328) ausgestattet ist, die zur Aufnahme des faseroptischen Kabels innerhalb desselben bemessen ist, und das an einem ersten Ende (311, 332) profiliert ist, um an dem Verbinder verankert zu werden, während es auf dem faseroptischen Kabel klemmend aufsitzt, wobei das rohrförmige Längenstück (302) mit Schmalen Öffnungen (305, 306, 333, 334) ausgebildet ist, die normal in bezug auf die Achse der Bohrung Orientiert sind,
**dadurch gekennzeichnet,** daß eine vorbestimmte Anzahl von Öffnungen (305, 306, 333, 334) jeweils an einer Seite eine kleine Erhöhung (307, 308, 335, 336) vorbestimmter Gestalt und Größe aufweist, die quer zu der Öffnung vorsteht, sich jedoch nicht ganz bis zu der gegenüberliegenden Seite der Öffnung erstreckt.

2. Spannungsentlastungselement (301,331) nach Anspruch 1, **gekennzeichnet durch**
nachgiebige Einrastmittel (312, 337) an dem ersten Ende (311, 332) zum Erfassen des Verbinders, wobei das Spannungsentlastungselement (301, 331) einen Teil des faseroptischen Kabels in seinem Inneren einklemmt, wodurch das faseroptische Kabel an einem Hinein- und Herausrutschen oder Verdrehen in bezug auf das Spannungsentlastungselement (301, 331) gehindert ist.

3. Spannungsentlastungselement nach Anspruch 1 oder Anspruch 2, **dadurch gekennzeichnet,** daß die schmalen Öffnungen in abgestuften Reihen verteilt sind.

## Revendications

1. Retenue mécanique (301, 331) destinée à protéger un câble à fibre optique à son entrée dans un connecteur , comportant :
une longueur globalement tubulaire (302) de matière flexible, présentant une lumière axiale cylindrique (304, 328) dimensionnée pour recevoir en elle ledit câble à fibres optiques, profilée à une première extrémité (311, 332) de façon à être ancrée audit connecteur tout en étant serrée sur ledit câble à fibres optiques, ladite longueur tubulaire (302) étant formée de façon à avoir des ouvertures étroites (305, 306, 333, 334) orientées normalement par rapport à l'axe de ladite lumière, caractérisée en ce qu'un nombre prédéterminé desdites ouvertures (305, 306, 333, 334) ont chacune un côté pouvu d'un petit bossage (307, 308, 335, 336) de forme et de dimension prédéterminées qui fait saillie à travers l'ouverture mais qui ne s'étend pas tout à fait jusqu'au côté opposé à l'ouverture.

2. Retenue mécanique (301, 331) selon la revendication 1, caractérisée en ce qu'elle comprend :
un moyen de verrouillage flexible (312, 337) de ladite première extrémité (311, 332) destiné à engager le connecteur, ladite retenue mécanique (301, 331) serrant l'intérieur d'elle-même une partie dudit câble à fibres optiques, de manière que ledit câble à fibre optique ne puisse pas glisser vers l'intérieur ou l'extérieur de ladite retenue mécanique (301, 331) ou tourner par rapport à elle.

3. Retenue mécanique selon la revendication 1 ou la revendication 2, caractérisée en ce que les ouvertures étroites sont distribuées en séries décalées.
